# FASCICULE DE BREVET EUROPEEN

(11) **EP 1 016 345 B1**
(45) Date de publication et mention de la délivrance du brevet: **15.03.2006**
(21) Numéro de dépôt: 99204506.2
(22) Date de dépôt: 23.12.1999
(51) Int. Cl.: A22C 25/00

(54) **Procédé et dispositif pour former des filets de viande ou de poisson sous pression**
Verfahren und Vorrichtung zum Formen von Fisch- oder Fleischfilets unter Druck
Method and device for forming fish- or meatfillets under pressure

(30) Priorité: 28.12.1998 FR 9816497
(43) Date de publication de la demande: 05.07.2000
(73) Titulaire: SOCIETE DES PRODUITS NESTLE S.A., 1800 Vevey (CH)
(72) Inventeur: Blauwart, Robert, 76330 Tourville-La-Chapelle (FR)
(74) Mandataire: Thomas, Alain

(56) Documents cités:
- EP-A- 0 647 409
- BE-A- 749 279
- FR-A- 2 145 730
- US-A- 3 924 012

## Description

La présente invention concerne un procédé et un dispositif pour sa mise en oeuvre, destinés à réaliser des morceaux de poisson, de viande ou de volaille, en forme de filet ou équivalent, par pression, à partir d'un bloc de poisson ou de viande congelée.

L'invention trouve plus particulièrement application dans le_domaine de la poissonnerie dite industrielle.

Le poisson est vendu au public à la consommation sous des formes variées, et on connaît l'attrait du consommateur pour le poisson en filets.

La première méthode de réalisation de filet consiste à lever directement du poisson les filets, soit lors de la vente au détail par le poissonnier, soit sur le lieu de pêche directement, les filets étant alors congelés. Ces filets conservent leur caractère individuel et présentent une forme naturelle du fait de leur prélèvement direct du poisson. Cependant, leur taille variable et leur coût relativement élevé, du fait de la main d'oeuvre et/ou des appareillages nécessaires, limitent leur vente.

La seconde méthode de réalisation de filets est effectuée sur les lieux de pêche, c'est-à-dire sur les bateaux, les poissons sont dépecés de manière à séparer la chair consommable du reste (arêtes, viscères et autres), les morceaux de chair consommables étant alors conformés par pression en plaque et soumis à congélation ; ladite plaque présente des dimensions standards de cinq cent millimètres par deux cent cinquante, sur soixante millimètres d'épaisseur, le tout donnant un poids d'environ sept kilos et demi.

Le prix du poisson au kilo provenant d'une plaque de poisson est inférieur d'environ cinquante pour cent par rapport au prix de filet de poisson individuel levé directement du poisson.

On a donc cherché, de manière connue, à réaliser des morceaux de poisson pour les conformer et leur donner une forme proche d'un filet ou ressemblant à un filet, pour d'une part abaisser le coût de revient et donc de vente du poisson ainsi proposé au public, et d'autre part proposer à la vente une plus grande variété de poisson et de s'affranchir des arrivages, grâce aux avantages apportés par le poisson en plaque.

De manière connue, telle que décrite par exemple dans le brevet français N° 7225720, on découpe, à partir d'une plaque de poisson standard, des morceaux de poisson qui sont disposés dans un moule fermé présentant une forme générale extérieure proche d'un filet de poisson. Les morceaux de poisson sont alors soumis à une pression très élevée (quelques tonnes, voir plusieurs dizaines de tonnes), ce qui provoque le déplacement de la chair de poisson pour occuper l'ensemble de l'espace intérieur du moule. Ensuite, le bloc de poisson, toujours congelé, est extrait du moule.

Si l'aspect extérieur du filet obtenu semble répondre au goût du consommateur, il n'en est pas de même des qualités organoleptiques du morceau de poisson ainsi soumis à ce traitement. En effet, lors de l'application de la pression, la chair du poisson est déstructurée et il en résulte une altération du goût d'une part, et une coloration à terme d'autre part (provenant de l'oxydation). Les morceaux de poisson ainsi conformés en filets présentent une durée de stockage inférieure à six mois.

Ainsi, le consommateur se voit offrir deux types de filet, d'une part un filet de poisson obtenu par levage de celui-ci du poisson, avec la qualité de goût et de conservation que l'on connaît, mais d'un coût relativement élevé, et d'autre part un morceau de poisson ressemblant à un filet, de ' coût inférieur, mais dont les qualités organoleptiques et les possibilités de conservation n'égalent pas celles du filet levé.

Le brevet US 3'924'012 décrit un procédé pour réaliser à partir de plaques de matériau congelé, des portions de denrées alimentaires. Pour ce faire, le procédé prévoit une presse dont les machoires comportent des dents alternées et de forme complémentaires qui, en pénétrant les unes dans les autres, viennent découper par cisaillement des portions de matériau à partir de la plaque disposée entre les machoires de la presse. Ce cisaillement entraine une dégradation du matériau composant la denrée alimentaire.

La présente invention remédie à cette situation et propose un procédé et un dispositif pour sa mise en oeuvre permettant de réaliser des morceaux de poisson présentant la forme de filet, et dont les qualités organoleptiques et gustatives et les possibilités de conservation sont très proches de celles d'un filet levé directement d'un poisson, le tout dans des conditions économiques de réalisation très avantageuses.

A cette fin, selon l'invention, le procédé pour la réalisation de denrées alimentaires, par exemple escalope ou filet de poisson, dans lequel on soumet à pression une plaquette de viande, de poisson ou de volaille, selon deux plans sensiblement parallèles, à l'aide de deux éléments dont l'un au moins est mobile, à savoir un premier élément plan et un second élément de forme au moins partiellement complémentaire à la forme finale voulue dudit filet, ledit second élément étant de forme et gabarit tels qu'il soit ouvert suivant au moins un plan transversal auxdits plans parallèles, et de manière à permettre un léger déplacement ou déformation libre de la plaquette parallèlement auxdits plans parallèles et étant conçu de manière à n'appliquer la pression que sur une partie de la surface de la plaquette, et de préférence à l'exclusion de la partie médiane de celle-ci.

De préférence, l'élément est de forme et de gabarit général sensiblement complémentaire à ladite plaquette, de manière que l'application de la pression n'entraîne qu'un déplacement et une déformation partielle et/ou localisée de ladite plaquette lors de l'application de la pression.

Avantageusement, on limite la course de déplacement de l'élément mobile, jusqu'à une position correspondant à l'obtention du filet.

La pression est inférieure à une tonne (98,06.10⁶ N/m², de préférence comprise entre 200 et 1000 kg entre 19,61.10⁶ et 98,06.10⁶ N/m², et de préférence entre 400 et 800 kg entre 39,22.10⁶ et 78,43.10⁶ N/m².

L'invention présente un second aspect, à savoir un procédé et un dispositif permettant de réaliser une pluralité de plaquettes simultanément, et celles-ci étant disposées de manière à subir ladite pression de conformation en filet sans manipulation supplémentaire.

En effet, on sait que dans l'art antérieur, les plaquettes sont découpées par des lames de scie, qui d'une part engendrent une perte non négligeable, et d'autre part et surtout obligent à manipuler manuellement les plaquettes découpées, pour les disposer dans une configuration telle qu'elles puissent subir simultanément la conformation sous pression.

A cette fin, on réalise au préalable une pluralité de plaquettes trapézoïdales selon une disposition relative, les unes par rapport aux autres, apte à permettre d'appliquer la pression simultanément sur les plaquettes formées, sans manipulation supplémentaire, puis on soumet à pression simultanément lesdites plaquettes. Celles-ci sont de forme générale proche du filet souhaité, et dont au moins une dimension est sensiblement inférieure aux deux autres dimensions formant lesdits deux plans sensiblement parallèles.

Le découpage de la plaquette est réalisé à l'aide, soit d'un jet d'eau sous pression, soit selon l'invention par application de lames.

Selon un mode préféré, on réalise au préalable au moins une plaquette de forme générale trapézoïdale en appliquant deux lames correspondant aux deux côtés dudit trapèze, et plus précisément, on applique plusieurs lames disposées en quinconce sur ladite plaque pour réaliser une pluralité de plaquettes.

Avantageusement, on dispose entre les deux lames une surface d'appui mobile à l'encontre d'une force de rappel.

L'invention concerne également un dispositif pour la mise en oeuvre du procédé, caractérisé en ce qu'il comprend ledit second élément lequel est muni d'au moins un socle mobile élastiquement par rapport à au moins un élément d'appui le socle étant configuré de manière à découper ou déformer les bords de la plaquette tandis que l'élément d'appui prend appui sur la partie médiane de la plaquette à découper ou déformer.

Ledit second élément est constitué d'une coquille de forme générale correspondant au filet souhaité, ouverte au moins à l'une des extrémités frontale et/ou arrière, définissant une partie médiane sensiblement plane et deux flancs latéraux dont la surface intérieure rejoint la surface intérieure de ladite partie plane selon une courbe différente d'un angle droit.

De préférence, les flancs présentent une surface courbe rejoignant les bords de ladite partie plane médiane, et la partie médiane est mobile par rapport audit second élément, selon une direction parallèle à l'application de la pression, à l'encontre d'un ressort de compression.

Pour réaliser plusieurs filets simultanément, le dispositif comporte une pluralité de coquilles adjacentes.

L'invention sera bien comprise à la lumière de la description qui suit se rapportant à des exemples illustratifs mais non limitatifs en référence aux dessins annexés, dans lesquels :
- La figure 1 est une vue en perspective montrant le dessous d'une forme de réalisation de plusieurs moyens associés de découpe des blocs ou plaquettes ;
- Les figures 2 et 3 sont des vues schématiques en perspective frontale, et de face montrant deux étapes de découpage d'une plaquette ou bloc de poisson ;
- La figure 4 est une vue en perspective d'une plaquette ou bloc ainsi réalisé(e);
- La figure 5 est une vue en perspective montrant le dessous des moyens de conformation des filets ;
- Les figures 6 et 7 montrent en perspective frontale deux étapes successives de conformation du filet, à partir de la plaquette de la figure 4, et
- La figure 8 montre en perspective le filet ainsi réalisé.

L'invention est décrite ci-après dans l'exemple particulier de la réalisation de filets de poissons, à partir de blocs ou plaquettes de poisson, eux-mêmes issus du découpage de plaques de poisson standards, connues de l'homme de l'art, et présentant une dimension universelle à ce jour, à savoir de 483 mm par 254 sur 63 mm d'épaisseur, et réalisées de manière connue.

L'invention comporte deux aspects, à savoir un dispositif permettant de découper, à partir d'une plaque congelée, des blocs ou des plaquettes présentant deux dimensions sensiblement supérieures à la troisième, appelés pour commodité «plaquettes » ci-après.

Le second aspect de l'invention est décrit ci-après dans le cadre de la réalisation de filets, ou plus généralement de morceaux de poisson ou de viande présentant une forme extérieure proche d'un filet, permettant au consommateur d'avoir l'impression de consommer un filet directement levé du poisson, dans l'exemple décrit ci-après.

Il est entendu que la réalisation de filets peut faire appel soit au premier aspect de l'invention permettant le découpage de plaquettes (destinées à réaliser des filets), soit à des techniques connues.

On décrit tout d'abord ci-après le dispositif permettant l'obtention de plaquettes de forme déterminée à partir de plaques de poisson standards (ou de plaques obtenues par découpage d'une plaque standard).

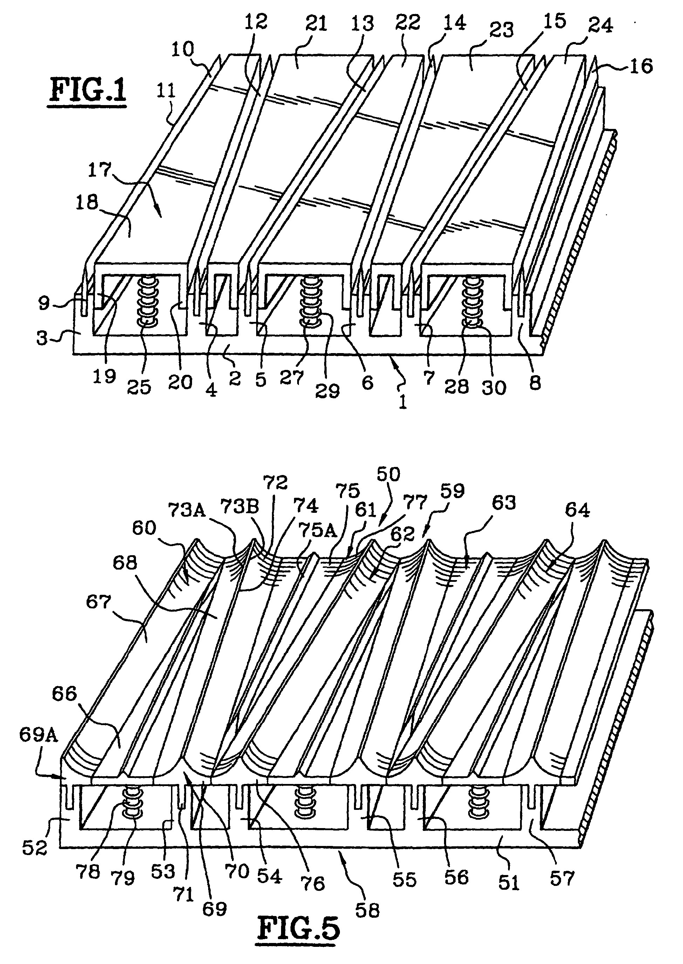

En référence à la figure 1, on a représenté en perspective vu de dessous un exemple de réalisation d'un dispositif permettant la découpe de plaquettes multiples.

Le dispositif comporte une plaque de base ou socle référencé 1, de forme générale parallélépipédique, dont deux dimensions sont supérieures à la troisième (l'épaisseur). Sur une des faces du socle 1 sont prévus des membrures en relief et de forme générale parallélépipédique et venues de matière avec le socle 1. Les membrures sont disposées dans une direction suivant sensiblement l'un des bords du socle 1. Les membrures ne sont pas parallèles entre elles mais forment des lignes convergentes. Ainsi, deux membrures contiguës forment en vue de dessus (perpendiculairement au plan de la surface du socle 1, un trapèze ; les trapèzes sont disposés tête-bêche, c'est-à-dire qu'un petit côté alterne avec un grand côté pour le trapèze voisin, vus dans un plan transversal (dans l'épaisseur du socle 1).

Dans l'exemple montré sur la figure 1, le socle comporte ainsi les membrures référencées 3, 4, 5, 6, 7 et 8, le socle 1 n'étant représenté qu'en partie. Les extrémités frontales (du côté avant de la perspective montrée sur la figure 1) des membrures 3 et 4, sont espacées d'une distance correspondant à la grande base d'un trapèze, tandis que la distance séparant les extrémités frontales des membrures 4 et 5 correspondent à la petite base du trapèze voisin. Du côté opposé, c'est-à-dire du côté arrière (non visible sur la figure 1), les distances séparant les extrémités arrières des membrures 3 et 4 d'une part et 4 et 5 d'autre part, correspondent à l'inverse, respectivement au petit côté du trapèze et au grand côté du trapèze voisin.

Chaque membrure 3, 4, 5, 7, 8 est pourvue d'une rainure longitudinale, de préférence de forme parallélépipédique, et apte à recevoir la semelle, de forme complémentaire et portant la référence 9, d'une lame 10 dont le bord effilé 11 est parallèle à la surface du socle 1. La lame 10 est ainsi associée à la membrure 3, et les autres lames 12, 13, 14, 15 et 16 sont fixées sur les membrures respectivement 4 à 8. Les lames 10, 12, 13, 14, 15 et 16 présentent leurs bords effilés suivant des directions correspondant aux membrures respectivement 3 à 8. Les bords effilés des lames sont disposés dans un même plan, parallèle à la surface du socle 1.

Des éléments présentant une section en forme générale de U sont prévus entre chaque membrure. Ainsi, entre les membrures 3 et 4 respectivement est prévu un élément d'appui 17 et comportant une plaque d'appui 18, de forme générale trapézoïdale, et deux rebords latéraux 19 et 20, constituant les branches dudit U. Les rebords 19 et 20 sont conformés et à distance telle que l'élément d'appui 17 est disposé entre les membrures 3 et 4, et plus précisément de manière à pouvoir se déplacer selon une direction transversale au plan du socle 1. En d'autres termes, le U formé par l'élément de calage 17 et le U formé par le socle 1 et les membrures 3 et 4 sont complémentaire et disposés en opposition.

Il est ainsi prévu plusieurs éléments d'appui 17, 21, 22, 23, et 24, un entre chaque couple de membrures contiguës.

Les éléments d'appui sont solidaires du socle 1 par l'intermédiaire de boulon et écrou tel que celui référencé 25 pour l'élément de calage 17, dont les extrémités sont associées à des écrous (non représentés) et prenant appui respectivement sur le plan d'appui 18 de l'élément 17, et la face intérieure (non représentée) du socle 1. Un ressort de compression 26 est enroulé autour du boulon 25 de manière à créer une force tendant à repousser l'élément d'appui 17, en l'éloignant du socle 1. Le boulon 25 et les écrous associés (non représentés) sont tels qu'ils bloquent l'élément 17 en une position telle que le plan d'appui 18 de celui-ci soit sensiblement au niveau du plan défini par le fil des lames 10, 12, 13, 14, 15 et 16.

Les éléments d'appui 17, 21, 22, 23 et 24 sont susceptibles de se déplacer selon une direction verticale descendante à l'encontre du ressort, puis lorsque la pression extérieure appliquée au socle est relâchée, le ressort 26 repousse alors l'élément d'appui vers sa position de repos (située au niveau du plan du fil des lames et telle que représentée sur la figure 1).

Seuls certains boulons et ressorts sont représentés sur la figure 1 du fait de la perspective, étant entendu que pour chaque élément d'appui 17, 21, 22, 23 et 24 est prévu un couple de boulons/écrous/ressorts, de préférence du côté des extrémités frontale et arrière de l'ensemble. Ainsi, seuls les écrous 27 et 28 sont représentés, associés aux ressorts 29 et 30 respectivement, les couples 27, 29 et 28, 30 étant disposés du côté de l'extrémité frontale des éléments d'appui 22 et 24.

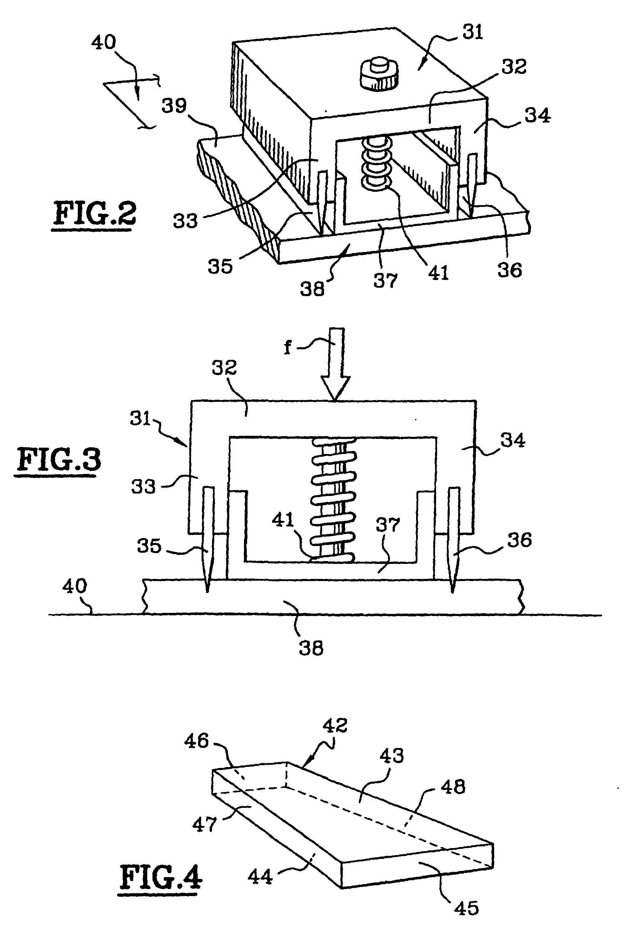

Le mode d'utilisation du dispositif de découpe de plaquettes de poisson congelé, de la figure 1, est décrit ci-après en référence aux figures 2, 3 et 4.

Sur la figure 2 a été représenté, en perspective frontale, un dispositif simplifié comportant un socle 31, comprenant une base 32, prolongée de chaque côté et à angle droit, de deux membrures parallélépipédiques 33 et 34, pourvues chacune, comme indiqué en regard de la figure 1, d'une lame respectivement 35 et 36. Un élément d'appui 37 est prévu et présente une forme de U vu en coupe transversale. La figure 2 montre une vue en perspective frontale du dispositif.

Dans un premier temps (figure 2), le dispositif de découpe est posé sur une plaque de poisson congelé référencée 38, de manière que le fil des lames 35 et 36 repose sur la face supérieure 39 de la plaque de poisson 38. La plaque est soit du type standard, soit une plaque obtenue par découpage, de manière connue, dans l'épaisseur d'une plaque standard.

Dans un second temps, comme représenté sur la figure 3 en vue de face, on applique une pression verticale descendante (flèche f) sur le socle 31, ce qui provoque le déplacement des lames 35 et 36 dans l'épaisseur de la plaque 38 de poisson. Le mouvement est poursuivi jusqu'à ce que le fil des arêtes porte sur le plan support 40 sur lequel est disposée la plaque de poisson 38. Les lames ont alors traversé toute l'épaisseur de la plaque 38. A titre indicatif, la pression exercée f est de l'ordre de 80 à 150 kg, et de préférence 100 Kg.

On note que, pendant le mouvement vertical descendant du socle 31 et des lames 35 et 36, l'élément d'appui 37 repose sur la partie de la plaque 38 disposée entre les lames et reste sensiblement fixe, tandis que le socle 31 se déplace vers le bas, ce qui provoque un mouvement relatif entre ce dernier et l'élément d'appui 37, à l'encontre du ressort de compression 41 prévu dans l'espace intérieur délimité par les deux U disposés tête-bêche, respectivement du socle 31 et l'élément d'appui 37. La force du ressort est telle que l'élément d'appui 37 ne pénètre que très légèrement ou pas du tout dans la plaque de poisson 38.

Une fois que les lames ont pénétré dans la plaque 38 sur toute son épaisseur, la poussée (flèche f) sur le socle 31 est arrêtée, ce qui provoque la remontée vers le haut du socle 31, par l'action du ressort 41 qui se détend en prenant appui sur l'élément d'appui 37, lui-même prenant appui sur la plaque de poisson 38.

On dégage ensuite l'ensemble socle 31 et élément d'appui 37, et on obtient alors la plaquette de poisson congelée référencée 42 et montrée sur la figure 4. En l'espèce, celle-ci présente la forme d'un prisme à base trapézoïdale, et comporte deux faces respectivement supérieure 43 et inférieure 44, un côté frontal 45 (grande base du trapèze), un côté arrière 46 (petite base du trapèze) et deux côtés latéraux 47 et 48 disposés en biais et de manière convergente.

A titre d'exemple, la plaquette ainsi obtenue présente les dimensions suivantes :
- côté 45 grande base : 68 mm
- côté arrière 46 petite base : 30 mm
- hauteur du trapèze (dans le sens longitudinal) : 161 mm

Toute autre dimension pourrait être appropriée en fonction des besoins, les chiffres indiqués ci-dessus n'étant donnés qu'à titre illustratif.

On comprend que le dispositif de la figure 1 permet de réaliser la découpe simultanée de plusieurs plaquettes de poisson similaires à celle référencée 42 sur la figure 4.

Une fois la plaquette 42 obtenue, le procédé et le dispositif de l'invention permettent de conformer celui-ci et lui donner une présentation proche d'un filet de poisson, pour agrémenter la vente.

L'invention permet d'éviter toute perte de denrée que l'on rencontre dans l'art antérieur qui fait appel à une lame de scie, dont l'épaisseur représente une quantité de matière non négligeable, lorsque l'on multiplie les opérations de sciage et compte tenu des grandes quantités de plaquettes à réaliser, notamment dans le domaine de la poissonnerie à échelle industrielle.

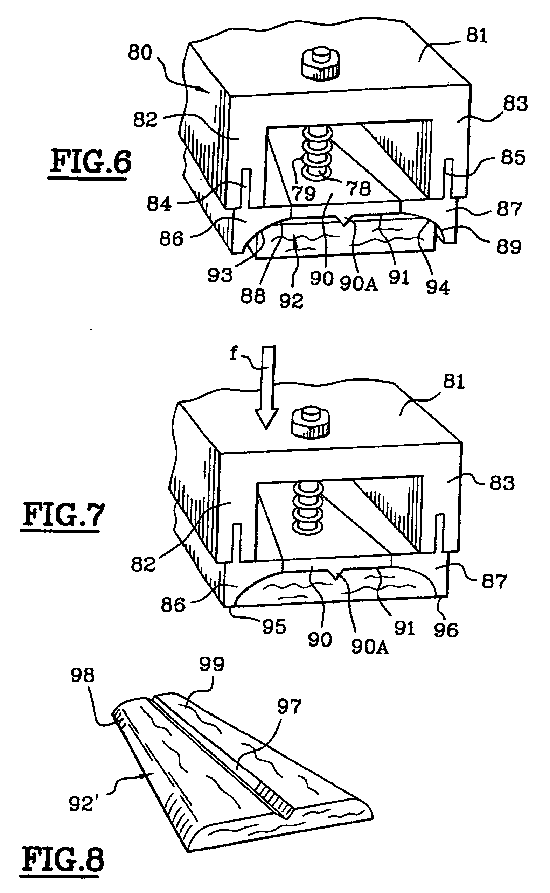

Il est fait référence maintenant à la figure 5 qui montre une forme de réalisation du dispositif 50 de conformation de filet, selon l'invention, et comprenant une embase 51 de forme parallélépipédique, et dont une seule partie est montrée pour des raisons de clarté.

Sur ladite embase 51 sont disposées, venues de matière, des membrures 52, 53, 54, 55, 56 et 57 longitudinales formant, vu en coupe transversale, une série de U. Deux membrures voisines (par exemple 52 et 53) sont convergentes, la distance les séparant décroissant depuis la face frontale 58 jusqu'à la face arrière 59 (faces transversales). Les deux membrures suivantes 53 et 54 présentent, à partir de la face frontale, une distance les séparant qui augmente. Ainsi, les membrures deux à deux forment, en vue de dessus, des trapèzes disposés tête-bêche, c'est-à-dire qu'une grande base alterne avec une petite base, vu en coupe transversale, c'est-à-dire selon les faces frontales 58 et arrière 59.

Les membrures sont toutes de même hauteur (c'est-à-dire que les branches des U qu'elles forment sont de même longueur), les faces supérieures de chaque membrure 52 à 57 étant disposées dans le même plan, parallèle à l'embase 51.

Sur les faces supérieures des membrures 52 à 57 est disposé un ensemble formant une alternance de coquilles 60, 61, 62, 63 et 64, en forme générale de demi-tronc de cône aplati (plus précisément aplati suivant une direction radiale dudit cône).

Chaque coquille, et plus particulièrement en référence à la coquille 60, comporte une partie centrale ou médiane sensiblement plane 66, en forme de triangle isocèle (en vue de dessus), et deux flancs latéraux 67 et 68 présentant une surface intérieure courbe, arrondie et jointive avec le plan formé par la partie médiane 66. Plus particulièrement, la partie médiane 66 est de forme telle que les deux côtés du triangle qu'elle forme (dont la base est située du côté de la face frontale 58 de l'embase 51) convergent du côté de la face arrière 59 de l'embase 51. Les flancs latéraux 67 et 68 sont jointifs sur la face arrière.

Chaque coquille comporte ainsi une partie frontale plus large (dans un plan tranversal) que la partie arrière.

Les coquilles 60 à 64 sont disposées tête-bêche et en alternance de manière que, sur la face frontale 58 de l'embase 51, alterne ainsi une série d'extrémités de grande largeur et de petite largeur des coquilles. L'alternance est inversée sur la face arrière 59.

Dans une première forme de réalisation (non représentée) on réalise les coquilles dans une pièce monobloc, de forme générale parallélépipédique, et dont l'une des faces est plane et fixée sur la partie supérieure des membrures 52 à 57, et dont l'autre face (opposée à l'embase 51) est conformée pour présenter les coquilles décrites ci-dessus.

Selon la forme de réalisation représentée sur la figure 5, les coquilles sont réalisées en plusieurs éléments associés les uns aux autres.

Sur chaque membrure 52 à 57 de l'embase 51 est fixée une traverse. Sur la membrure 53 est fixée une traverse 69 comprenant un linteau 70 sensiblement parallélépipédique et sur la face inférieure duquel est disposée une languette 71 de forme également parallélépipédique et apte à venir s'encastrer dans une nervure de forme complémentaire prévue dans la membrure correspondante 53.

Le linteau 70 de la traverse 69 présente une forme, vu en coupe transversale, de chapeau à corne, dont la face supérieure comporte deux flancs latéraux 68 et 72 en forme de partie de cylindre ; les arêtes supérieures (opposées à l'embase 51) 73A et 73B des flancs latéraux 68 et 72 sont parallèles et proches l'une de l'autre, séparés par exemple d'une distance de l'ordre du millimètre, pour former un bord longiligne étroit 74.

Sur chaque membrure 52 à 57 est prévue une traverse telle que la traverse 69 décrite ci-dessus, les traverses étant disposées deux à deux de manière à conformer, avec la partie médiane, la coquille correspondante. Ainsi, pour la coquille 61, les traverses 69 et 76 forment chacune avec un flanc 72 et 77, et avec la partie centrale 75, la coquille 61.

Chaque traverse comporte ainsi deux flancs parallèles, séparés par un bord supérieur (74 pour la traverse 69). Deux traverses contiguës coopèrent chacune pour former, avec les deux flancs en regard et avec la partie médiane correspondante, la coquille correspondante.

La symétrie ou la répétitivité des motifs formés par l'alternance tête bêche des coquilles, fait que les traverses disposées sur les bords latéraux de l'embase 51 (telles que la traverse 69A) ne comporte qu'un flanc 67 courbe, l'autre surface de la traverse opposée au flanc 67 étant plane et perpendiculaire à l'embrase 58.

Dans la forme de réalisation montrée sur la figure 5, les parties médianes sont montées mobiles par rapport à l'ensemble fixe et rigide formé par l'embase 51 et les traverses. Les parties médianes 66 et 75 par exemple, appartenant aux coquilles voisines 60 et 61, sont rendues solidaires de l'embase 51 par l'intermédiaire d'un boulon 78 dont l'une des extrémités est fixée sur la partie inférieure (faisant face à l'embase 51) de la partie médiane 66, et dont l'autre extrémité traverse un trou prévu dans l'embase 51 et associé à des écrous (non représentés). Un ressort de compression 79 est disposé autour du boulon 78, de manière à exercer une force tendant à repousser la partie médiane 66 en l'éloignant de l'embase 51. La disposition respective des écrous, du boulon, du ressort et de la partie médiane 66 est telle que la partie médiane 66, dans la position de repos (montré sur la figure 5), affleure par sa surface supérieure, au niveau des bords correspondants des flancs latéraux 67 et 68, pour former la coquille 60.

Les parties médianes présentent donc un degré de liberté en translation, perpendiculairement au plan de l'embase 51, par rapport aux flancs latéraux 67 et 68 de la coquille correspondante 60, dans l'exemple de la partie médiane 66.

A chaque extrémité de chaque partie médiane est associé un ensemble boulon/ressort/écrou, un seul ensemble boulon/ressort étant représenté pour certaines des parties médianes, pour des raisons de clarté et compte tenu de la vue en perspective du dessin.

Le dispositif de conformation de la figure 5 peut comporter 5 à 10 coquilles ou plus.

Par ailleurs, les plaquettes trapézoïdales sont réalisées simultanément par le dispositif de la figure 1, de manière à présenter après découpage une configuration relative les unes par rapport aux autres qui permettent d'appliquer le dispositif de conformation de la figure 5, à coquilles multiples, sans avoir à manipuler les plaquettes, puisque celles-ci sont disposées pour être à l'aplomb des coquilles de forme sensiblement complémentaire aux plaquettes.

Le dispositif de conformation de la figure 5 comporte autant de coquilles que de trapèzes correspondant aux lames du dispositif de découpage de la figure 1.

Le mode d'utilisation du dispositif de conformation de filet de la figure 5 est explicité ci-après dans son principe, en référence aux figures 6 à 8.

On a représenté sur les figures 6 et 7, pour des raisons de clarté, un dispositif simplifié par rapport à celui de la figure 5, et comprenant une embase 80 en forme de U vu en coupe transversale, représenté partiellement dans sa longueur pour des raisons de commodité.

L'embase 80 comporte une semelle 81 de forme générale parallélépipédique, et deux côtés latéraux 82 et 83 disposés à angle droit. Dans l'épaisseur des côtés latéraux 82 et 83 est prévue une nervure parallélépipédique et apte à recevoir une patte longitudinale de forme complémentaire, référencée respectivement 84 et 85, et solidaire d'une traverse 86 et 87 correspondant à celle référencée 69 A et disposée sur le côté latéral du dispositif de la figure 5, la traverse 69A ne comportant qu'un flanc 67. De même, les traverses 86 et 87 ne comportent qu'un flanc à surface arrondie, référencé 88 et 89 respectivement.

Entre les traverses 86 et 87 est prévue une partie médiane triangulaire 90, similaire à celles décrites en regard de la figure 5.

Les surfaces courbes des flancs 88 et 89 d'une part, et la surface 91 (opposée à l'embase 80) de la partie médiane 90 d'autre part, forment une coquille, en forme de section de tronc de cône aplati.

Le dispositif comporte en outre un couple boulon 78/ressort 79 (dont un seul est montré), similaire à ceux décrit en regard de la figure 5, associé à la partie médiane mobile 90.

Dans un premier temps, on approche l'ensemble embase 80, traverses 86 et 87 et partie médiane 90 d'une plaquette 92 de poisson congelé, de forme prismatique à base trapézoïdale et similaire à celle représentée sur la figure 4. La plaquette 92 est disposée sur un support plan horizontal.

L'ensemble est disposé de manière à reposer dans un premier temps sur la plaquette de poisson 92. Ce faisant, du fait du simple poids de l'ensemble, les arêtes longitudinales supérieures 93 et 94 de la plaquette 92 se trouvent légèrement biseautées ou aplaties et prennent une forme légèrement arrondie du fait de leur contact avec la surface arrondie des flancs 88 et 89.

Dans un second temps, on soumet l'ensemble embase 80 et traverses 86 et 87, à une force verticale descendante (flèche f de la figure 7), ce qui provoque le déplacement vers le bas, c'est-à-dire vers la plaquette de poisson 92, de l'ensemble et ainsi la déformation légère de la plaque de poisson 92, principalement au niveau de ses arêtes 93 et 94 longitudinales, pour que la plaquette de poisson prenne la forme de la coquille correspondante. La partie médiane de la plaque 92 ne subit pas ou très peu de pression provenant de l'ensemble embase 80 et traverses 86 et 87. Du fait de la mobilité relative de la partie médiane 90 de la coquille, le ressort 79 absorbe dans un premier temps ladite pression. Ainsi, une partie de la plaquette subit la pression, et plus précisément les parties latérales longitudinales de celle-ci (en regard des traverses 86 et 87).

La pression appliquée est de quelques centaines de Kg.

Les forme et dimensions de la coquille sont très proches ou similaires de la forme et des dimensions de la plaquette de poisson 92, pour éviter toute déformation importante ou un fluage ou déplacement de matière qui pourrait nuire à l'homogénéité de la chair de poisson constituant la plaquette 92.

Plus particulièrement, la hauteur de la coquille dans le plan transversal, correspond sensiblement à l'épaisseur de la plaque de poisson 92, ou est très légèrement supérieure ou inférieure à celle-ci.

On aboutit à la position de la figure 7 où les bords 95 et 96 inférieurs (opposés à l'embase 80) des traverses 86 et 87, viennent en butée sur le support sur lequel est disposée la plaquette de poisson 92. Ce phénomène de butée permet de limiter la course et le déplacement en translation de l'ensemble par rapport à la plaquette de poisson, jusqu'à une position où celle-ci est conformée et prend la forme de la coquille correspondante, sans déformation ni fluage importants.

Après enlèvement ou déplacement de l'ensemble embase 80, traverses 86 et 87 en partie médiane 90, on obtient un filet 92' (figure 8). La pression exercée par le ressort 79 sur la partie médiane 90 mobile permet de désolidariser ou décoller le filet de la coquille.

La membrure médiane 90A en section de triangle et faisant saillie par rapport à la surface 91 de la partie médiane 90, portant contre la plaquette 92, réalise dans cette dernière, un sillon ou une nervure de forme complémentaire que l'on peut voir sur la figure 8 et portant la référence 97.

La figure 8 montre le filet de poisson 92' réalisé à partir de la plaquette de poisson 92. Les bords longitudinaux 98 et 99 sont arrondis, et la surface supérieure du filet 92' comporte la nervure 97 expliquée précédemment.

La chair du poisson ne subit pas de déformation ou fluage ou écrasement important susceptible de nuire à ses qualités organoleptiques. En effet, le phénomène de butée précédemment décrit, limite la course de l'ensemble mobile et donc évite l'écrasement de la plaquette 92. Par ailleurs, la coquille apte à recevoir la plaquette de poisson 92 est ouverte à ses extrémités frontale et arrière. Ceci permet un déplacement de la chair constituant la plaquette de poisson 92 dans le sens longitudinal (parallèle au plan de l'embase).

Par ailleurs, la partie médiane 90 de la coquille étant mobile par rapport au reste de l'embase, celle-ci n'applique la pression que sur une partie de la plaquette, notamment et principalement les bords, à l'exclusion de la partie médiane, ce qui évite de déformer outre mesure la chair (viande, volaille ou poison).

On évite ainsi les inconvénients de l'art antérieur où la chair de poisson est disposée dans un espace clos qui limite les déplacements de la chair de poisson et engendre des contraintes nuisibles aux qualités de saveur de la chair. Par ailleurs, l'invention permet de n'appliquer que des pressions relativement modérées (quelques centaines de kg) comparée à l'art antérieur qui fait appel à des pressions de plusieurs tonnes, voire plusieurs dizaines de tonnes.

Il est entendu que la présente invention est applicable également à d'autres denrées alimentaires que le poisson, par exemple des viandes, charcuteries ou autres, et de manière générale à toute denrée alimentaire susceptible d'être préparée et présentée sous la forme plus naturelle telle qu'un filet (par exemple escalope, steak ou autres) à partir d'un bloc, d'une plaquette ou plaque de la même denrée alimentaire, de forme générale parallélépipédique ou prismatique.

Toute forme est susceptible d'être utilisée afin de réaliser l'article souhaité et selon la forme voulue.

## Revendications

1. Procédé pour la réalisation de denrées alimentaires, par exemple escalope ou filet de poisson, dans lequel on soumet une plaquette de viande, de poisson, ou de volaille, à une pression selon deux plans sensiblement parallèles, à l'aide de deux éléments dont l'un au moins est mobile, à savoir un premier élément plan (40) et un second élément (1-36, 50-90) de forme au moins partiellement complémentaire à la forme finale voulue dudit filet, ledit second élément (1-36, 50-90) étant de forme et gabarit tels qu'il soit ouvert suivant au moins un plan transversal auxdits plans parallèles, et de manière à permettre un léger déplacement ou déformation libre de la plaquette parallèlement auxdits plans parallèles, **caractérisé en ce que** ledit second élément (1-36, 50-90) est conçu de manière à n'appliquer la pression que sur une partie de la surface de la plaquette (42), et de préférence à l'exclusion de la partie médiane de celle-ci.

2. Procédé selon la revendication 1, **caractérisé en ce que** l'élément (1-36, 50-90) est de forme et de gabarit général sensiblement complémentaire à ladite plaquette (42), de manière que l'application de la pression n'entraîne qu'un déplacement et une déformation partielle et/ou localisée de ladite plaquette (42) lors de l'application de la pression.

3. Procédé selon la revendication 1 ou 2, **caractérisé en ce que** l'on limite la course de déplacement de l'élément mobile (1-36, 50-90), jusqu'à une position correspondant à l'obtention du filet.

4. Procédé selon l'une des revendications 1 à 3, **caractérisé en ce que** l'on soumet la plaquette à une pression inférieure à 98,06.10⁶ N/m², de préférence comprise entre 19,61.10⁶ et 98,06.10⁶ N/m² et de préférence entre 39,22.10⁶ et 78,43.10⁶ N/m².

5. Procédé selon l'une des revendications 1 à 4, **caractérisé en ce que** l'on réalise au préalable au moins une plaquette de forme générale trapézoïdale en appliquant deux lames (35, 36) correspondant aux deux côtés dudit trapèze.

6. Procédé selon la revendication 5, **caractérisé en ce que** l'on applique plusieurs lames (11-16) disposées en quinconce sur ladite plaque (38) pour réaliser une pluralité de plaquettes.

7. Procédé selon l'une des revendications précédentes, **caractérisé en ce que** l'on soumet à pression simultanément plusieurs plaquettes, de forme trapézoïdale, de forme générale proche du filet souhaité, et dont au moins une dimension est sensiblement inférieure aux deux autres dimensions formant lesdits deux plans sensiblement parallèles.

8. Procédé selon la revendication 7, **caractérisé en ce que** l'on réalise au préalable une pluralité de plaquettes trapézoïdales (42) selon une disposition relative, les unes par rapport aux autres, apte à permettre d'appliquer la pression simultanément sur les plaquettes formées, sans manipulation supplémentaire.

9. Dispositif pour la mise en oeuvre du procédé selon l'une des revendications 1 à 8, **caractérisé en ce qu'** il comprend ledit second élément (1-36, 50-90) lequel est muni d'au moins un socle (1, 31, 81) mobile élastiquement par rapport à au moins un élément d'appui (17, 21-24, 37, 91); le socle (1, 31, 81) étant configuré de manière à découper ou déformer les bords de la plaquette tandis que l'élément d'appui (17, 21-24, 37, 91) prend appui sur la partie médiane de la plaquette à découper ou déformer.

10. Dispositif selon la revendication 9, **caractérisé en ce qu'**il comporte une butée limitant le déplacement de l'élément mobile.

11. Dispositif selon l'une des revendications 9 ou 10, **caractérisé en ce que** ledit second élément (80-90) est constitué d'une coquille (60) de forme générale correspondant au filet souhaité, ouverte au moins à l'une des extrémités frontale et/ou arrière, définissant une partie médiane (91) sensiblement plane et deux flancs latéraux (88, 89) dont la surface inférieure rejoint la surface intérieure de ladite partie plane selon une courbe différente d'un angle droit

12. Dispositif selon la revendication 11, **caractérisé en ce que** les flancs (88, 89) présentent une surface courbe rejoignant les bords de ladite partie plane médiane (91).

13. Dispositif selon l'une des revendications 11 ou 12, **caractérisé en ce que** la partie médiane (91) est mobile par rapport audit second élément (80-90), selon une direction parallèle à l'application de la pression, à l'encontre d'un ressort de compression (79).

14. Dispositif selon l'une quelconque des revendications 11 à 13, **caractérisé en ce qu'**il comporte une pluralité de coquilles adjacentes (60-64).

15. Dispositif selon la revendication 9, **caractérisé en ce que** le socle (1) est muni de membrures (33, 34) pourvues respectivement d'une lame (35, 36, 10, 12-16).

## Patentansprüche

1. Verfahren zur Herstellung von Nahrungsmitteln, beispielsweise von Schnitzeln oder Fischfilet, bei dem man eine Fleisch-, Fisch- oder Geflügelscheibe auf zwei im wesentlichen parallelen Ebenen mit Hilfe von zwei Elementen einem Druck aussetzt, von denen mindestens eines beweglich ist, und zwar einem ersten ebenen Element (40) und einem zweiten Element (1-36, 50-90) mit einer zur gewünschten endgültigen Form des Filets mindestens teilweise komplementären Form, wobei das zweite Element (1-36) 50-90) eine solche Form und ein solches Profil besitzt, dass es in mindestens einer zu den parallelen Ebenen sich quer erstreckenden Ebene offen ist und dass eine leichte freie Bewegung oder Verformung der Scheibe parallel zu den parallelen Ebenen möglich ist, **dadurch gekennzeichnet, dass** das zweite Element (1-36, 50-90) so ausgelegt ist, dass es den Druck nur auf einen Teil der Oberfläche der Scheibe (42) ausübt, und zwar vorzugsweise mit Ausnahme ihres Mittelteils.

2. Verfahren nach Anspruch 1, **dadurch gekennzeichnet, dass** die Form und das Profil des Elements (1-36, 50-90) allgemein im wesentlichen komplementär zu der Scheibe (42) sind, so dass die Ausübung des Drucks nur eine partielle und/oder lokalisierte Bewegung und Verformung der Scheibe (42) bei der Ausübung des Drucks mit sich bringt.

3. Verfahren nach Anspruch 1 oder 2, **dadurch gekennzeichnet, dass** man den Weg der Bewegung des beweglichen Elements (1-36, 50-90) bis zu einer Stellung begrenzt, die der Herstellung des Filets entspricht.

4. Verfahren nach einem der Ansprüche 1 bis 3, **dadurch gekennzeichnet, dass** man die Scheibe einem Druck von weniger als 98, 06.10⁶ N/m², vorzugsweise zwischen 19,61.10⁶ und 98,06.10⁶ N/m² und vorzugsweise zwischen 39, 22.10⁶ und 78,43.10⁶ N/m² aussetzt.

5. Verfahren nach einem der Ansprüche 1 bis 4, **dadurch gekennzeichnet, dass** man zuvor mindestens eine allgemein trapezförmige Scheibe herstellt, indem man zwei Klingen (35, 36) ansetzt, die den beiden Seiten des Trapezes entsprechen.

6. Verfahren nach Anspruch 5, **dadurch gekennzeichnet, dass** man mehrere Klingen (11-16) ansetzt, die auf der Platte (38) versetzt angeordnet sind, um eine Vielzahl von Scheiben herzustellen.

7. Verfahren nach einem der vorhergehenden Ansprüche, **dadurch gekennzeichnet, dass** man gleichzeitig mehrere Scheiben mit Trapezform mit der dem gewünschten Filet nahen allgemeinen Form dem Druck aussetzt, bei denen mindestens eine Abmessung im Wesentlichen kleiner als die beiden anderen Abmessungen ist, die die beiden im wesentlichen parallelen Flächen bilden.

8. Verfahren nach Anspruch 7, **dadurch gekennzeichnet, dass** man zuvor eine Vielzahl von trapezförmigen Scheiben (42) in einer Anordnung zueinander herstellt, die das gleichzeitige Ausüben des Drucks auf die gebildeten Scheiben ohne zusätzliche Manipulation gestatten kann.

9. Vorrichtung zur Durchführung des Verfahrens nach einem der Ansprüche 1 bis 8, **dadurch gekennzeichnet, dass** sie das zweite Element (1-36, 50-90) umfasst, das mit mindestens einem Sockel (1, 31, 81) versehen ist, der bezüglich mindestens eines Auflageelements (17, 21-24, 37, 91) elastisch beweglich ist, wobei der Sockel (1, 31, 81) so ausgebildet ist, dass die Ränder der Scheibe geschnitten oder verformt werden, während das Auflageelement (17, 21-24, 37, 91) auf dem Mittelteil der zu schneidenden oder zu verformenden Scheibe aufliegt.

10. Vorrichtung nach Anspruch 9, **dadurch gekennzeichnet, dass** sie einen Anschlag aufweist, der die Bewegung des beweglichen Elements begrenzt.

11. Vorrichtung nach einem der Ansprüche 9 oder 10, **dadurch gekennzeichnet, dass** das zweite Element (80-90) aus einer Schale (60) mit einer dem gewünschten Filet entsprechenden allgemeinen Form besteht, die mindestens an einem der Enden, und zwar am vorderen Ende und/oder am hinteren Ende, offen ist und einen im Wesentlichen ebenen Mittelteil (91) und zwei seitliche Flanken (88, 89) begrenzt, deren untere Fläche die Innenfläche des ebenen Teils gemäß einer von einem rechten Winkel abweichenden Kurve trifft.

12. Vorrichtung nach Anspruch 11, **dadurch gekennzeichnet, dass** die Flanken (88, 89) eine gekrümmte Fläche aufweisen, die mit den Rändern des ebenen Mittelteils (91) zusammentreffen.

13. Vorrichtung nach einem der Ansprüche 11 oder 12, **dadurch gekennzeichnet, dass** der Mittelteil (91) bezüglich des zweiten Elements (80-90) in einer zur Ausübung des Drucks parallelen Richtung entgegen einer Druckfeder (79) beweglich ist.

14. Vorrichtung nach einem der Ansprüche 11 bis 13, **dadurch gekennzeichnet, dass** sie eine Vielzahl von aneinander angrenzenden Schalen (60-64) umfasst.

15. Vorrichtung nach Anspruch 9, **dadurch gekennzeichnet, dass** der Sockel (1) mit Schenkeln (33, 34) versehen ist, die jeweils mit einer Klinge (35, 36, 10, 12-16) bestückt sind.

## Claims

1. Process for producing foodstuffs, for example escalope or fillet of fish, in which a small slab of meat, fish or poultry is subjected to a pressure in two substantially parallel planes with the aid of two elements of which at least one is movable, namely a first, flat element (40) and a second element (1-36, 50-90) having a shape which is at least partly complementary to the required final shape of the said fillet, the said second element (1-36, 50-90) being of a shape and size such that it is open along at least one plane transverse to the said parallel planes, and in such a way as to permit a slight displacement or free deformation of the small slab parallel to the said parallel planes, **characterised in that** the said second element (1-36, 50-90) is designed in such a way as to apply the pressure only to part of the surface of the small slab (42), and preferably with the exclusion of the median part of the latter.

2. Process according to claim 1, **characterised in that** the element (1-36, 50-90) is of a shape and a general size which is substantially complementary to the said small slab (42), in such a way that the application of the pressure brings about only a displacement and a partial and/or localised deformation of the said small slab (42) when the pressure is applied.

3. Process according to claim 1 or 2, **characterised in that** the displacement travel of the movable element (1-36, 50-90) is limited to a position which corresponds to the obtention of the fillet.

4. Process according to one of claims 1 to 3, **characterised in that** the small slab is subjected to a pressure of less than 98.06x10⁶ N/m², preferably of between 19.61x10⁶ and 98.06x10⁶ N/m², and preferably between 39.22x10⁶ and 78.43x10⁶ N/m².

5. Process according to one of claims 1 to 4, **characterised in that** at least one small slab of trapezoidal general shape is produced first, by applying two blades (35, 36) which correspond to the two sides of the said trapezium.

6. Process according to claim 5, **characterised in that** a number of blades (11-16) disposed in a staggered manner are applied to the said slab (38) in order to produce a plurality of small slabs.

7. Process according to one of the preceding claims, **characterised in that** a number of small slabs, which are of trapezoidal shape and of a general shape close to that of the desired fillet and of which at least one dimension is substantially smaller than the other two dimensions forming the said two substantially parallel planes, are subjected to pressure simultaneously.

8. Process according to claim 7, **characterised in that** a plurality of trapezoidal small slabs (42) is produced first in accordance with a disposition, relative to one another, which is capable of allowing the pressure to be applied simultaneously to the small slabs formed, without further manipulation.

9. Device for implementing the process according to one of claims 1 to 8, **characterised in that** it comprises the said second element (1-36, 50-90) which is equipped with at least one base (1, 31, 81) which is movable elastically in relation to at least one supporting element (17, 21-24, 37, 91); the base (1, 31, 81) being configured in such a way as to cut out or deform the edges of the small slab while the supporting element (17, 21-24, 37, 91) rests on the median part of the small slab to be cut out or deformed.

10. Device according to claim 9, **characterised in that** it has a stop which limits the displacement of the movable element.

11. Device according to one of claims 9 or 10, **characterised in that** the said second element (80-90) is made up of a shell (60) of a general shape corresponding to that of the desired fillet, which is open at least at one of the front and/or rear ends, defining a substantially flat median part (91) and two lateral flanks (88, 89) whose lower surface meets the inner surface of the said flat part along a curve other than a right angle.

12. Device according to claim 11, **characterised in that** the flanks (88, 89) have a curved surface which meets the edges of the said median flat part (91).

13. Device according to one of claims 11 or 12, **characterised in that** the median part (91) is movable in relation to the said second element (80-90), in a direction parallel to the application of the pressure, against a compression spring (79).

14. Device according to any of claims 11 to 13, **characterised in that** it has a plurality of adjacent shells (60-64).

15. Device according to claim 9, **characterised in that** the base (1) is equipped with flanges (33, 34) which are provided, respectively, with a blade (35, 36, 10, 12-16).
